# EUROPEAN PATENT APPLICATION

(11) **EP 3 499 095 A1**
(43) Date of publication of application: **19.06.2019**
(21) Application number: 17841340.7
(22) Date of filing: 25.07.2017
(51) Int. Cl.: F16J 9/16, F02F 5/00

(54) **PISTON RING**

(30) Priority: 15.08.2016 JP 2016159288
(71) Applicant: Kabushiki Kaisha Riken, Tokyo 102-8202 (JP)
(72) Inventor: SHIMIZU Hiroshi, Kashiwazaki-shi Niigata 945-8555 (JP); NAKAMURA Daisuke, Kashiwazaki-shi Niigata 945-8555 (JP)
(74) Representative: Luten, Martin Haaije
(86) International application number: PCT/JP2017/026804
(87) International publication number: WO 2018/034112

(57) **Abstract**

In a joint section 3 of a piston ring 1, on a side surface 2a of a body 2, a first protrusion portion 13 and a first reception portion 14 are provided, on a side surface 2b of the body 2, a second protrusion portion 15 and a second reception portion 16 are provided, on an inner circumferential surface 2c side of the body 2, a first male portion 21 and a first female portion 22 are provided, and, on an outer circumferential surface 2d side of the body 2, a second male portion 23 and a second female portion 24 are provided. The first male portion 21 has an inclined surface 21b which faces the outer circumferential surface 2d side and is inclined with respect to a mating surface 21a with respect to the first female portion 22 so that a front end of the first male portion 21 tapers, and the second male portion 23 has an inclined surface 23b which faces the inner circumferential surface 2c side and is inclined with respect to a mating surface 23a with respect to the second female portion 24 so that a front end of the second male portion 23 tapers.

## Description

### TECHNICAL FIELD

The present invention relates to a piston ring that is used in an internal combustion engine.

### BACKGROUND ART

A piston ring that is used in an internal combustion engine of an automobile or the like is provided in, for example, a ring groove on an outer circumferential surface of a piston. An outer circumferential surface of the piston ring comes into sliding contact with an inner circumferential surface of a bore, and one side surface of the piston ring comes into contact with a side surface of the ring groove, whereby a function of preventing blow-by gas from a combustion chamber side toward a crankcase side is provided. Such a piston ring has a split ring shape with a joint section for the convenience of mounting into the ring groove, and thus there is a problem with the inhibition of blow-by gas in the joint section.

With respect to the above-described problem, for example, Patent Literature 1 discloses a piston ring having a special joint structure. In a joint section of this piston ring, a protrusion portion which forms a wedge shape having a cross-section that tapers inward in a radial direction and extends in a circumferential direction is provided at one joint end. In addition, a recess portion that serves as a reception portion of the protrusion portion is provided at the other joint end. In this configuration, the sealability of blow-by gas is improved by ensuring the degree of adhesion between mating surfaces of the protrusion portion and the reception portion.

### Citation List

### Patent Literature

(Patent Literature 1) Japanese Unexamined Utility Model Publication No. S60-108748

### SUMMARY OF INVENTION

### Technical Problem

Meanwhile, when the piston ring is mounted into the ring groove on the outer circumferential surface of the piston, the piston ring is mounted into the ring groove by expanding the inner diameter of the ring to be equal to or larger than the outer diameter of the piston. The piston in which the piston ring has been mounted is inserted into a cylinder block in an engine assembly step.

When the piston is inserted into the cylinder block, the diameter of the piston ring is reduced to the inner diameter of a cylinder. At this time, compared to a piston ring having a joint structure called an ordinary straight joint, in the piston ring having the special joint structure as described in Patent Literature 1, there is a case in which the protrusion portion and the recess portion provided in the joint section collide with each other. At this time, a corner portion of the protrusion portion first collides with the other joint end, and at least one of chipping and breakage occurs in the joint section of the piston ring, and thus there is a concern that a property of sealing a fluid (sealability) cannot be sufficiently ensured.

An object of the present invention is to provide a piston ring capable of inhibiting the breakage of a joint section and preferably ensuring sealability.

### Solution to Problem

A piston ring according to an aspect of the present invention is a piston ring including an annular body having an inner circumferential surface and an outer circumferential surface facing each other and a joint section formed in the body, in which, in the joint section, on one side surface of the body, a first protrusion portion that protrudes from one joint end toward the other joint end and a first reception portion that receives the first protrusion portion in the other joint end are provided, on the other side surface of the body, a second protrusion portion that protrudes from the other joint end toward the one joint end and a second reception portion that receives the second protrusion portion in the one joint end are provided, on an inner circumferential surface side of the body, a first male portion that protrudes from the second protrusion portion toward the second reception portion and a first female portion that receives the first male portion in the second reception portion are provided, on an outer circumferential surface side of the body, a second male portion that protrudes from the first protrusion portion toward the first reception portion and a second female portion that receives the second male portion in the first reception portion are provided, the first male portion has an inclined surface or a curved surface having a convex shape which faces the outer circumferential surface side and is inclined with respect to a mating surface with respect to the first female portion so that a front end of the first male portion tapers, and the second male portion has an inclined surface or a curved surface having a convex shape which faces the inner circumferential surface side and is inclined with respect to a mating surface with respect to the second female portion so that a front end of the second male portion tapers.

In the piston ring, both of the front ends of the first male portion and the second male portion taper. In addition, the inclined surface or the curved surface having a convex shape which faces the outer circumferential surface side in the first male portion and the inclined surface or the curved surface having a convex shape which faces the inner circumferential surface side in the second male portion are provided so as to face each other in the thickness direction of the piston ring. The above-described first and second male portions are provided in the joint section, whereby it is possible to cause the surface in the first male portion and the surface in the second male portion to first collide with each other when, for example, the diameter of the piston ring is reduced. In this case, the inclined surfaces, the curved surfaces, or the inclined surface and the curved surface, which are not provided with any corner portions, first collide with each other, and thus prevent the joint ends from being stuck to each other. Therefore, the concentration of a force being applied to reduce the diameter of the piston ring on the joint section is prevented, and it is possible to inhibit the breakage of the joint section. Additionally, a stepped interface is formed at a position at which the first protrusion portion and the first reception portion face each other on one side surface of the body and a position at which the second protrusion portion and the second reception portion face each other on the other side surface of the body are not in alignment. In addition, a stepped interface other than the above-described stepped interface is formed at a position at which the first male portion and the first female portion face each other on the inner circumferential surface side of the body and a position at which the second male portion and the second female portion face each other on the outer circumferential surface side of the body are not in alignment. Therefore, during the use of the piston ring, the two stepped interfaces are closed, whereby it is possible to inhibit gas passing through the joint section of the piston ring. Therefore, according to the piston ring, the joint ends being stuck to each other is prevented, the breakage of the joint section is inhibited, and it is possible to favorably ensure sealability.

The first male portion may have an inclined surface facing the outer circumferential surface side, and the second male portion may have an inclined surface facing the inner circumferential surface side. In this case, it is possible to bring the inclined surface in the first male portion and the inclined surface in the second male portion into surface contact with each other when both inclined surfaces collide with each other, and thus the concentration of stress does not easily occur. Therefore, it is possible to easily inhibit the breakage of the joint section. Additionally, the inclined surfaces slide along each other when the diameter of the piston ring is reduced, and it is possible to easily reduce the diameter of the piston ring.

The first male portion may have a curved surface having a convex shape which faces the outer circumferential surface side, and the second male portion may have a curved surface having a convex shape which faces the inner circumferential surface side. In this case, it is possible to favorably inhibit the first male portion and the second male portion from being stuck to each other.

The first male portion may have a front end surface which is a mating surface with respect to the first female portion and extends perpendicular to a circumferential direction, and the second male portion may have a front end surface which is a mating surface with respect to the second female portion and extends perpendicular to the circumferential direction. In this case, both of the front ends of the first male portion and the second male portion are as thick as the front end surfaces. Therefore, it is possible to ensure strength in the front ends of the first male portion and the second male portion and favorably inhibit the breakage of the joint section.

In a first internal corner portion formed by the first female portion and the second male portion, a first opposite surface which faces the inclined surface or the curved surface having a convex shape that faces the outer circumferential surface side of the first male portion may be provided, in a second internal corner portion formed by the second female portion and the first male portion, a second opposite surface which faces the inclined surface or the curved surface having a convex shape that faces the inner circumferential surface side of the second male portion may be provided, the first opposite surface may be a curved surface having a concave shape or a planar surface which faces the inner circumferential surface side, and the second opposite surface may be a curved surface having a concave shape or a planar surface which faces the outer circumferential surface side. In this case, it is possible to narrow a gap between the inclined surface or the curved surface of the first male portion and the first opposite surface and a gap between the inclined surface or the curved surface of the second male portion and the second opposite surface. Therefore, it is possible to inhibit the accumulation of sludge or the like in the above-described gaps.

The first opposite surface may be a curved surface having a concave shape which faces the inner circumferential surface side, and the second opposite surface may be a curved surface having a concave shape which faces the outer circumferential surface side.

The first opposite surface may be a planar surface which faces the inner circumferential surface side, and the second opposite surface may be a planar surface which faces the outer circumferential surface side.

A piston ring according to another aspect of the present invention is a piston ring including an annular body having an inner circumferential surface and an outer circumferential surface facing each other and a joint section formed in the body, in which, in the joint section, on one side surface of the body, a first protrusion portion that protrudes from one joint end toward the other joint end and a first reception portion that receives the first protrusion portion in the other joint end are provided, on the other side surface of the body, a second protrusion portion that protrudes from the other joint end toward the one joint end and a second reception portion that receives the second protrusion portion in the one joint end are provided, on an outer circumferential surface side of the body, a first male portion that protrudes from the second protrusion portion toward the second reception portion and a first female portion that receives the first male portion in the second reception portion are provided, on an inner circumferential surface side of the body, a second male portion that protrudes from the first protrusion portion toward the first reception portion and a second female portion that receives the second male portion in the first reception portion are provided, the first male portion has an inclined surface or a curved surface having a convex shape which faces the inner circumferential surface side and is inclined with respect to a mating surface with respect to the first female portion so that a front end of the first male portion tapers, and the second male portion has an inclined surface or a curved surface having a convex shape which faces the outer circumferential surface side and is inclined with respect to a mating surface with respect to the second female portion so that a front end of the second male portion tapers.

In this piston ring, both of the front ends of the first male portion and the second male portion taper. In addition, the inclined surface or the curved surface having a convex shape which faces the inner circumferential surface side in the first male portion and the inclined surface or the curved surface having a convex shape which faces the outer circumferential surface side in the second male portion are provided so as to face each other in the thickness direction of the piston ring. The above-described first and second male portions are provided in the joint section, whereby it is possible to cause the surface in the first male portion and the surface in the second male portion to first collide with each other when, for example, the diameter of the piston ring is reduced. In this case, the inclined surfaces, the curved surfaces, or the inclined surface and the curved surface, which are not provided with any corner portions, first collide with each other, and thus prevent the joint ends from being stuck to each other. Therefore, the concentration of a force being applied to reduce the diameter of the piston ring on the joint section is prevented, and it is possible to inhibit the breakage of the joint section. Additionally, a stepped interface is formed at a position at which the first protrusion portion and the first reception portion face each other on one side surface of the body and a position at which the second protrusion portion and the second reception portion face each other on the other side surface of the body are not in alignment. In addition, a stepped interface other than the above-described stepped interface is formed at a position at which the first male portion and the first female portion face each other on the outer circumferential surface side of the body and a position at which the second male portion and the second female portion face each other on the inner circumferential surface side of the body are not in alignment. Therefore, during the use of the piston ring, the two stepped interfaces are closed, whereby it is possible to inhibit gas passing through the joint section of the piston ring. Therefore, according to the piston ring, the joint ends being stuck to each other is prevented, the breakage of the joint section is inhibited, and it is possible to favorably ensure sealability.

The first male portion may have an inclined surface facing the inner circumferential surface side, and the second male portion may have an inclined surface facing the outer circumferential surface side. In this case, it is possible to bring the inclined surface in the first male portion and the inclined surface in the second male portion into surface contact with each other when both inclined surfaces collide with each other, and thus the concentration of stress does not easily occur. Therefore, it is possible to easily inhibit the breakage of the joint section. Additionally, the inclined surfaces slide along each other when the diameter of the piston ring is reduced, and it is possible to easily reduce the diameter of the piston ring.

The first male portion may have a curved surface having a convex shape which faces the inner circumferential surface side, and the second male portion may have a curved surface having a convex shape which faces the outer circumferential surface side. In this case, it is possible to favorably inhibit the first male portion and the second male portion from being stuck to each other.

The first male portion may have a front end surface which is a mating surface with respect to the first female portion and extends perpendicular to a circumferential direction, and the second male portion may have a front end surface which is a mating surface with respect to the second female portion and extends perpendicular to the circumferential direction. In this case, both of the front ends of the first male portion and the second male portion are as thick as the front end surfaces. Therefore, it is possible to ensure strength in the front ends of the first male portion and the second male portion and favorably inhibit the breakage of the joint section.

In a first internal corner portion formed by the first female portion and the second male portion, a first opposite surface which faces the inclined surface or the curved surface having a convex shape that faces the inner circumferential surface side of the first male portion may be provided, in a second internal corner portion formed by the second female portion and the first male portion, a second opposite surface which faces the inclined surface or the curved surface having a convex shape that faces the outer circumferential surface side of the second male portion may be provided, the first opposite surface may be a curved surface having a concave shape or a planar surface which faces the outer circumferential surface side, and the second opposite surface may be a curved surface having a concave shape or a planar surface which faces the inner circumferential surface side. In this case, it is possible to narrow a gap between the inclined surface or the curved surface of the first male portion and the first opposite surface and a gap between the inclined surface or the curved surface of the second male portion and the second opposite surface. Therefore, it is possible to inhibit the accumulation of sludge or the like in the above-described gaps.

The first opposite surface may be a curved surface having a concave shape which faces the outer circumferential surface side, and the second opposite surface may be a curved surface having a concave shape which faces the inner circumferential surface side.

The first opposite surface may be a planar surface which faces the outer circumferential surface side, and the second opposite surface may be a planar surface which faces the inner circumferential surface side.

A surface-treated film may be provided on at least one surface of the inner circumferential surface, the outer circumferential surface, the one side surface, the other side surface, the mating surface with respect to the first female portion, the inclined surface, and the curved surface having a convex shape in the first male portion, the mating surface with respect to the second female portion, the inclined surface, and the curved surface having a convex shape in the second male portion. In this case, the body can be protected by the surface-treated film.

The body may be formed of metal or an alloy. Therefore, it is possible to sufficiently ensure the heat resistance of the piston ring.

The body may be formed of a resin composition having heat resistance. Therefore, it is possible to easily form the joint section while ensuring the heat resistance of the piston ring.

The resin composition may include a filler for improving the heat resistance. Therefore, it is possible to ensure the heat resistance of the piston ring.

### Advantageous Effects of Invention

According to the piston ring according to the aspect of the present invention, it is possible to inhibit the breakage of the joint section and favorably ensure sealability.

### BRIEF DESCRIPTION OF DRAWINGS

Fig. 1 is a perspective view illustrating a first embodiment of a piston ring according to an aspect of the present invention.
Fig. 2 is an enlarged perspective view of a joint section of the piston ring illustrated in Fig. 1.
Fig. 3 is an enlarged perspective view illustrating the joint section of the piston ring illustrated in Fig. 1 from one side surface.
Fig. 4 is an enlarged perspective view illustrating the joint section of the piston ring illustrated in Fig. 1 from the other side surface.
Fig. 5 is an enlarged view of the joint section of the piston ring illustrated in Fig. 1 seen from the other side surface.
Fig. 6A is an enlarged view illustrating a piston ring according to a comparative example having a reduced diameter, and Fig. 6B is an enlarged view illustrating a piston ring according to the first embodiment having a reduced diameter.
Fig. 7A is an enlarged view of the joint section of the piston ring in a free state seen from an outer circumferential surface side, and Fig. 7B is an enlarged view of the joint section of the piston ring after being assembled into the piston seen from the outer circumferential surface side.
Fig. 8 is an enlarged view of a joint section of a piston ring according to a modified example of the first embodiment seen from the other side surface.
Fig. 9A is an enlarged view of a joint section of a piston ring according to a second embodiment seen from the other side surface, and Fig. 9B is an enlarged view of a joint section of a piston ring according to a modified example of the second embodiment seen from the other side surface.

### DESCRIPTION OF EMBODIMENTS

Hereinafter, preferred embodiments of a piston ring according to an aspect of the present invention will be described in detail with reference to drawings.

### (First embodiment)

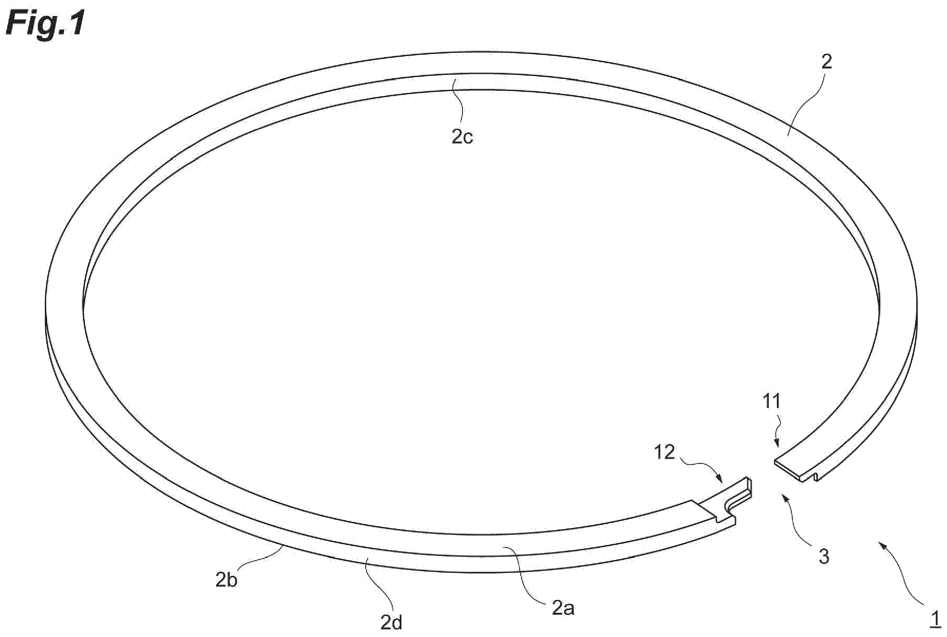

Fig. 1 is a perspective view illustrating a first embodiment of the piston ring according to the aspect of the present invention. A piston ring 1 illustrated in the drawing is provided in, for example, a ring groove on an outer circumferential surface of a piston ring in an internal combustion engine in an automobile. An outer circumferential surface 2d of the piston ring 1 comes into sliding contact with an inner circumferential surface of a bore, and a side surface 2b of the piston ring 1 comes into contact with a side surface of the ring groove and serves as a sealing surface, whereby a function of preventing blow-by gas from a combustion chamber side toward a crankcase side is provided.

This piston ring 1 includes an annular body 2 and a joint section 3 formed in a part of the body 2. The body 2 forms a substantially rectangular cross-sectional shape having a long side in a thickness direction and a short side in a width direction, the substantially rectangular cross-sectional shape being formed by a side surface 2a (one side surface) and the side surface 2b (the other side surface) which are gap faces in the width direction and an inner circumferential surface 2c and the outer circumferential surface 2d which are gap faces in the thickness direction. The body 2 is formed of, for example, metal or an alloy (cast iron or steel containing a plurality of metal elements) and thus has a sufficient strength, a sufficient thermal resistance, and a sufficient elasticity.

A surface of the body 2 is provided with, for example, a surface-treated film. The surface-treated film is, for example, a hard chromium-plated layer, a PVD-treated layer, a nitride layer of iron, chromium, or the like, or a hard film such as a diamond-like carbon (DLC) film. The abrasion resistance of the body 2 is improved by the surface-treated film. The surface of the body 2 refers to the side surfaces 2a and 2b, the inner circumferential surface 2c, and the outer circumferential surface 2d.

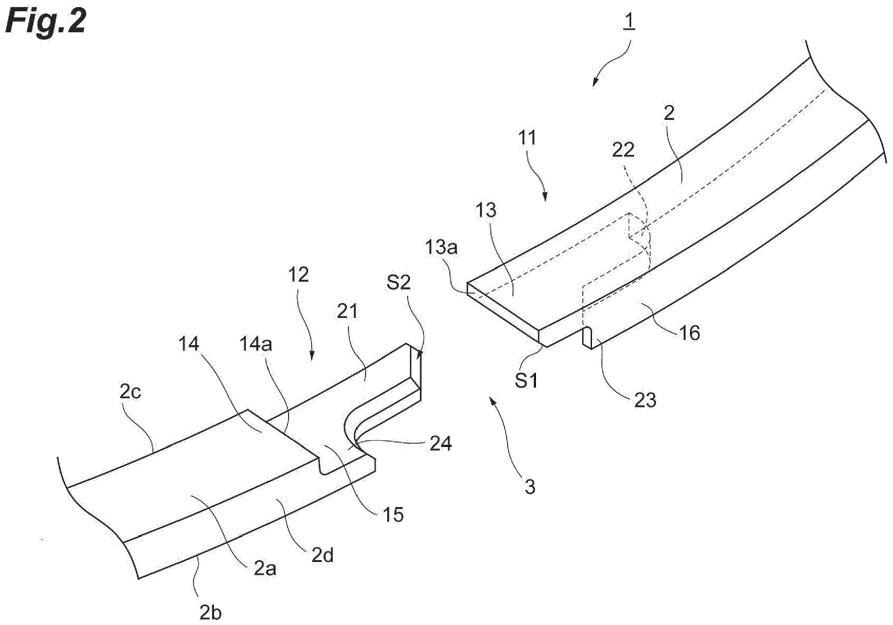

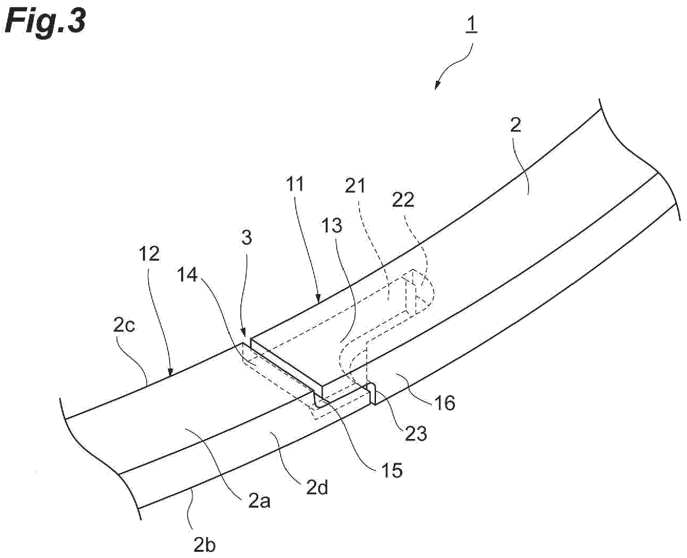

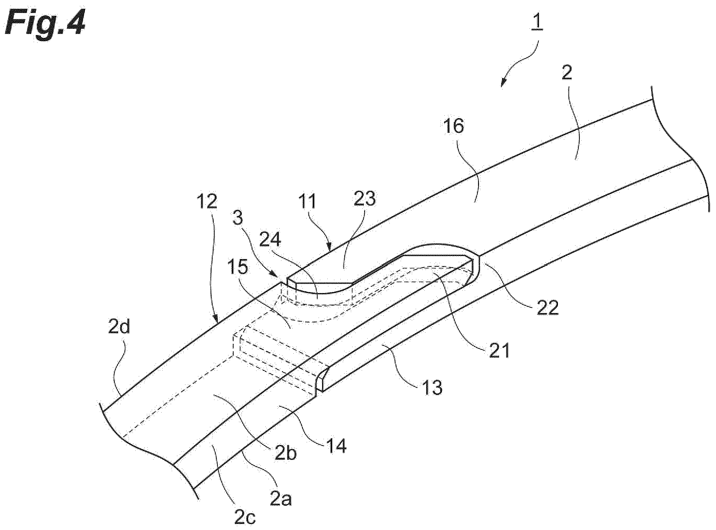

Fig. 2 is an enlarged perspective view of the joint section 3 of Fig. 1. Fig. 3 is an enlarged perspective view illustrating the joint section 3 of the piston ring 1 illustrated in Fig. 1 from a side surface 2a. Fig. 4 is an enlarged perspective view illustrating the joint section 3 of the piston ring 1 illustrated in Fig. 1 from a side surface 2b. As illustrated in Figs. 2 to 4, the joint section 3 is a separation formed in a part of the body 2 and is provided for the purpose of ensuring a mounting property of the piston ring 1 being mounted into the ring groove on the outer circumferential surface of the piston. In the joint section 3, in a state in which the piston ring 1 is yet to be mounted into the ring groove, one joint end 11 and the other joint end 12 are in a state of facing each other with a predetermined interval therebetween.

In the joint section 3, as illustrated in Fig. 2 to Fig. 4, a first protrusion portion 13 that protrudes from the one joint end 11 toward the other joint end 12 and a first reception portion 14 that receives the first protrusion portion 13 in the other joint end 12 are provided on the side surface 2a of the body 2. In addition, a second protrusion portion 15 that protrudes from the other joint end 12 toward the one joint end 11 and a second reception portion 16 that receives the second protrusion portion 15 in the one joint end 11 are provided on the side surface 2b of the body 2.

More specifically, in the first protrusion portion 13, an approximately half portion on the side surface 2a of the body 2 is in a state of protruding from the one joint end 11 in an approximately rectangular cross-sectional shape. In addition, in the first protrusion portion 13, a front end corner on the side surface 2b which faces the first reception portion 14 is notched. Therefore, a notched surface S1 is formed at a front end of the first protrusion portion 13 on the side surface 2b which faces the first reception portion 14. In the first reception portion 14, an approximately half portion of the other joint end 12 on the side surface 2a of the body 2 is in a state of being notched in an approximately rectangular cross-sectional shape according to the shape of the first protrusion portion 13. Each of a front end surface 13a that is a surface of the first protrusion portion 13 which faces the first reception portion 14 and a front end surface 14a that is an opposite surface of the first reception portion 14 which faces the first protrusion portion 13 has an approximately rectangular shape that extends perpendicular or approximately perpendicular to the circumferential direction.

Similarly, in the second protrusion portion 15, an approximately half portion on the side surface 2b of the body 2 is in a state of protruding from the other joint end 12 in an approximately rectangular cross-sectional shape. In addition, in the second protrusion portion 15, a front end corner on the side surface 2a which faces the second reception portion 16 is notched. Therefore, a notched surface S2 is formed at a front end of the second protrusion portion 15 on the side surface 2a which faces the second reception portion 16. In the second reception portion 16, an approximately half portion of the one joint end 11 on the side surface 2b of the body 2 is in a state of being notched in an approximately rectangular cross-sectional shape according to the shape of the second protrusion portion 15.

Furthermore, on the side surface 2b of the body 2 and on an inner circumferential surface 2c side of the body 2, a first male portion 21 that protrudes from the second protrusion portion 15 toward the second reception portion 16 and a first female portion 22 that receives the first male portion 21 in the second reception portion 16 are provided. In addition, on the side surface 2b of the body 2 and on an outer circumferential surface 2d side of the body 2, a second male portion 23 that protrudes from the second reception portion 16 toward the second protrusion portion 15 and a second female portion 24 that receives the second male portion 23 in the second protrusion portion 15 are provided. Therefore, on the side surface 2b, the first male portion 21, the first female portion 22, the second male portion 23, and the second female portion 24 form a so-called step joint.

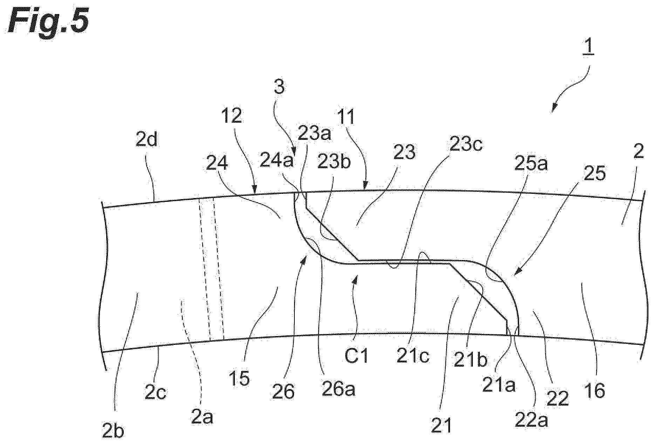

Hereinafter, the first male portion 21, the first female portion 22, the second male portion 23, and the second female portion 24 will be described in detail in this order using Fig. 5. Fig. 5 is an enlarged view of the joint section 3 seen from the side surface 2b.

As illustrated in Fig. 5, the first male portion 21 is in a state in which an approximately half portion on the inner circumferential surface 2c side of the second protrusion portion 15 protrudes. Specifically, the first male portion 21 has a mating surface 21a with respect to the first female portion 22 and an inclined surface 21b which faces the outer circumferential surface 2d side and is inclined with respect to the mating surface 21a so that a front end of the first male portion 21 tapers. The mating surface 21a is a front end surface which is positioned closer to a front end side of the first male portion 21 than the inclined surface 21b and on the inner circumferential surface 2c side and extends perpendicular to the circumferential direction. One end of the mating surface 21a and the inner circumferential surface 2c form the right angle. The inclined surface 21b is a flat surface connected to an end of the mating surface 21a on the outer circumferential surface 2d side and is formed by, for example, notching a corner portion of the first male portion 21 on the outer circumferential surface 2d side. The mating surface 21a and the inclined surface 21b form an obtuse angle. The angle formed by the mating surface 21a and the inclined surface 21b is, for example, 110° or more or 120° or more, and, 170° or less, 160° or less, or 150° or less. The proportion of the inclined surface 21b in the first male portion 21 in the thickness direction is, for example, 0.1 times or more, 0.2 times or more, or 0.5 times or more and 100 times or less, 50 times or less, or 35 times or less the proportion of the mating surface 21a.

The second male portion 23 is in a state in which an approximately half portion on the outer circumferential surface 2d side of the second reception portion 16 protrudes. Specifically, the second male portion 23 has a mating surface 23a with respect to the second female portion 24 and an inclined surface 23b which faces the inner circumferential surface 2c side and is inclined with respect to the mating surface 23a so that a front end of the second male portion 23 tapers. The mating surface 23a is a front end surface which is positioned closer to a front end side of the second male portion 23 than the inclined surface 23b and on the outer circumferential surface 2d side and extends perpendicular to the circumferential direction. One end of the mating surface 23a and the outer circumferential surface 2d form the right angle. The inclined surface 23b is a flat surface connected to an end of the mating surface 23a on the inner circumferential surface 2c side and is formed by, for example, notching a corner portion of the second male portion 23 on the inner circumferential surface 2c side. The mating surface 23a and the inclined surface 23b form an obtuse angle. The angle formed by the mating surface 23a and the inclined surface 23b is, for example, 110° or more or 120° or more, and, 170° or less, 160° or less, or 150° or less. The proportion of the inclined surface 23b in the second male portion 23 in the thickness direction is, for example, 0.1 times or more, 0.2 times or more, or 0.5 times or more and 100 times or less, 50 times or less, or 35 times or less the proportion of the mating surface 23a.

The first female portion 22 is in a state in which an approximately half portion of the second reception portion 16 on the inner circumferential surface 2c side is notched so as to be not in contact with the first male portion 21. An opposite surface 25a with respect to the inclined surface 21b (a first opposite surface) is provided in a first internal corner portion 25 formed by the first female portion 22 and the second male portion 23. The opposite surface 25a forms a curved surface having a concave shape which faces the inner circumferential surface 2c side and smoothly connects the mating surface 23c of the second male portion 23 with respect to the first male portion 21 and the mating surface 22a of the first female portion 22 with respect to the first male portion 21. Meanwhile, a base end side of the second male portion 23 which forms the first internal corner portion 25 is thicker than a front end side of the second male portion 23, and thus a strength to breakage (breakage strength) on the base end side of the second male portion 23 increases.

The second female portion 24 is in a state in which an approximately half portion of the second protrusion portion 15 on the outer circumferential surface 2d side is notched so as to be not in contact with the second male portion 23. An opposite surface 26a with respect to the inclined surface 23b (a second opposite surface) is provided in a second internal corner portion 26 formed by the second female portion 24 and the first male portion 21. The opposite surface 26a forms a curved surface having a concave shape which faces the outer circumferential surface 2d side and smoothly connects the mating surface 21c of the first male portion 21 with respect to the second male portion 23 and the mating surface 24a of the second female portion 24 with respect to the second male portion 23. Meanwhile, a base end side of the first male portion 21 which forms the second internal corner portion 26 is thicker than a front end side of the first male portion 21, and thus a strength to breakage (breakage strength) on the base end side of the first male portion 21 increases.

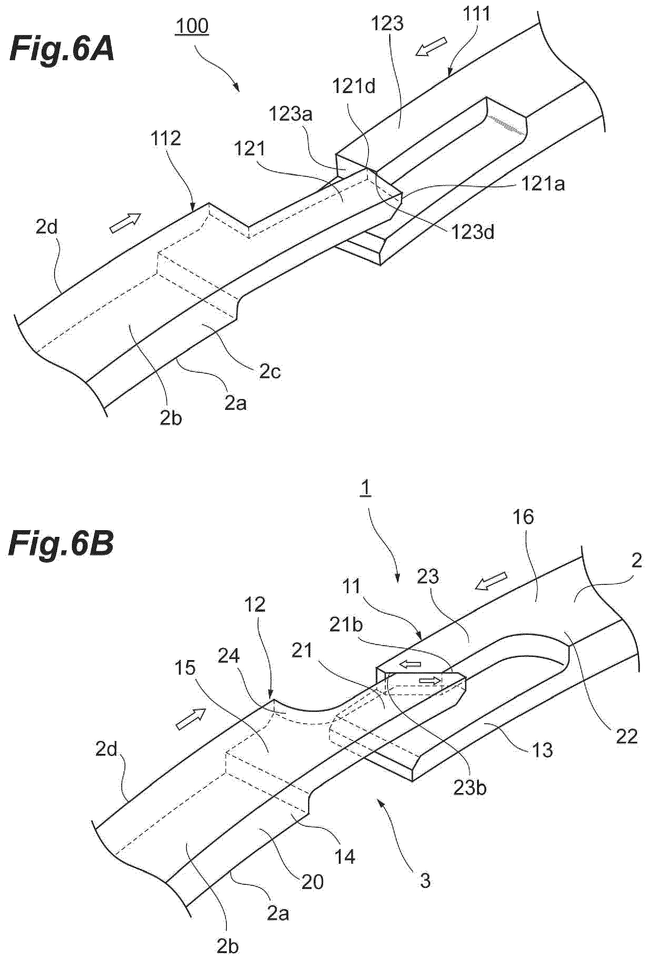

The action effect of the piston ring 1 having the above-described configuration will be described using Fig. 6. Fig. 6A is an enlarged view illustrating a piston ring according to a comparative example having a reduced diameter, and Fig. 6B is an enlarged view illustrating the piston ring 1 according to the first embodiment having a reduced diameter.

In the assembly of the piston ring (the mounting into the ring groove on the outer circumferential surface of the piston), first, the inner diameter of the ring is expanded to be equal to or larger than the outer diameter of the piston, thereby mounting the piston ring into the ring groove. The piston in which the piston ring has been mounted is inserted into a cylinder block in an engine assembly step. At this time, the diameter of the piston ring is reduced to the inner diameter of a cylinder so as not to hinder the insertion of the piston into the cylinder block due to the piston ring. Meanwhile, the diameter of the piston ring is reduced using, for example, a jig such as a taper cone.

Here, as illustrated in Fig. 6A, in a piston ring 100 according to the comparative example, a first male portion 121 does not have the inclined surface 21b, and a second male portion 123 does not have the inclined surface 23b. Therefore, a corner portion 121d is provided at a front end of the first male portion 121 on the outer circumferential surface 2d side, and a corner portion 123d is provided at a front end of the second male portion 123 on the inner circumferential surface 2c side. When the diameter of the above-described piston ring 100 is expanded, as illustrated in Fig. 6A, there is a case in which the corner portion 121d of the first male portion 121 may collide with a front end surface 123a of the second male portion 123 and the corner portion 121d may strike the second male portion 123 (or the corner portion 123d of the second male portion 123 may collide with a front end surface 121a of the first male portion 121 and the corner portion 123d may strike the first male portion 121). In this case, a force being applied to expand the diameter of the piston ring 100 may be concentrated on the first male portion 121 and the second male portion 123, and there is a case in which at least one of chipping and breakage occurs in joint ends 111 and 112.

On the other hand, in the piston ring 1 according to the first embodiment, both the front ends of the first male portion 21 and the second male portion 23 taper. In addition, the inclined surface 21b of the first male portion 21 and the inclined surface 23b of the second male portion 23 are provided so as to face each other in the thickness direction of the piston ring 1. The first male portion 21 and the second male portion 23 described above are provided in the joint section 3, whereby, in a case in which the joint ends 11 and 12 collide with each other when the diameter of the piston ring 1 is reduced as illustrated in Fig. 6B, it is possible to cause the inclined surfaces 21b and 23b to first collide with each other. In this case, the inclined surfaces 21b and 23b which are not provided with a corner portion collide with each other, and thus the first male portion 21 and the second male portion 23 are not easily stuck to each other. Additionally, the inclined surfaces 21b and 23b come into surface contact with each other during the collision, and thus the concentration of stress does not easily occur. Therefore, it is possible to easily inhibit the breakage of the joint section 3. Furthermore, the inclined surfaces 21b and 23b slide along each other in accordance with a force being applied to reduce the diameter of the piston ring 1, and it is possible to easily close the piston ring 1.

Additionally, as illustrated in Fig. 5, in the piston ring 1, a position at which the first male portion 21 and the first female portion 22 face each other on the inner circumferential surface 2c side of the body 2 and a position at which the second male portion 23 and the second female portion 24 face each other on the outer circumferential surface 2d side of the body 2 are not in alignment in the circumferential direction of the body. Therefore, in a case in which the joint section 3 is seen from the side surface 2b, a stepped interface C1 is formed by the mating surface 21a and the inclined surface 21b of the first male portion 21, the mating surface 22a of the first female portion 22, the opposite surface 25a of the first internal corner portion 25, the mating surface 21c of the first male portion 21, the mating surface 23c of the second male portion 23 with respect to the first male portion 21, the opposite surface 26a of the second internal corner portion 26, the mating surface 23a and the inclined surface 23b of the second male portion 23, and the mating surface 24a of the second female portion 24.

In the stepped interface C1, the mating surface 21c of the first male portion 21 with respect to the second male portion 23 and the mating surface 23c of the second male portion 23 with respect to the first male portion 21 are not easily affected by temperature expansion during the use of the piston ring 1. In addition, even in a case in which a load generated by the vertical motion of the piston is applied to the piston ring 1, the load does not easily apply in an opposite direction of the mating surfaces 21c and 23c, and friction also has a little influence, and thus it is possible to maintain the interval between the mating surfaces 21c and 23c to be small. Therefore, it becomes possible to minimize the circulation area of gas in the stepped interface C1, and it is possible to inhibit gas which has flown in from the inner circumferential surface 2c side of the piston ring 1 from flowing through the stepped interface C1 and out of the outer circumferential surface 2d side.

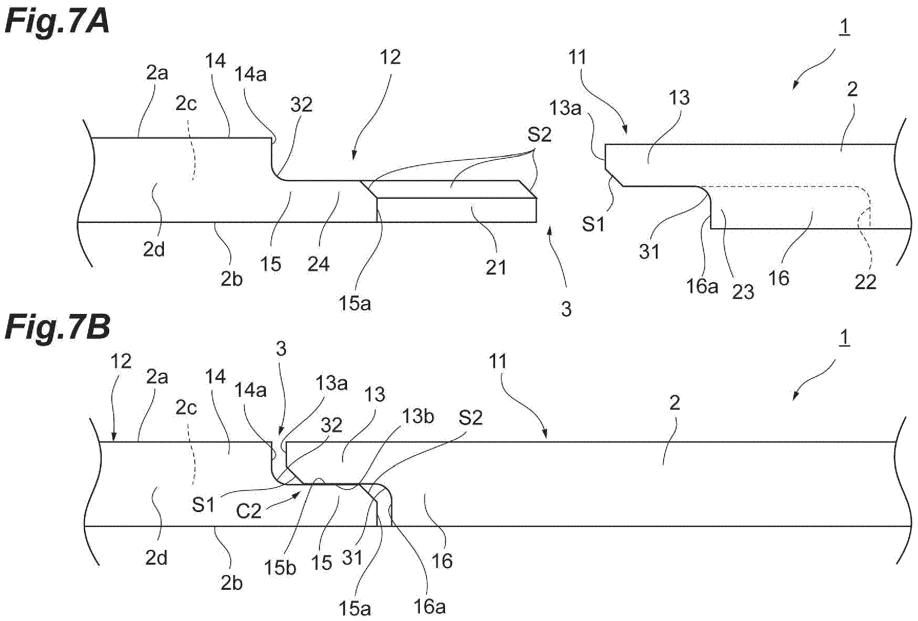

Fig. 7A is an enlarged view of the joint section 3 of the piston ring 1 in a free state seen from the outer circumferential surface 2d side, and Fig. 7B is an enlarged view of the joint section 3 of the piston ring 1 after being assembled into the piston seen from the outer circumferential surface 2d side. As illustrated in Fig. 7B, when the piston ring 1 is mounted into the ring groove on the outer circumferential surface of the piston, a position at which the first protrusion portion 13 and the first reception portion 14 face each other on the side surface 2a of the body 2 and a position at which the second protrusion portion 15 and the second reception portion 16 face each other on the side surface 2b of the body 2 are not in alignment in the circumferential direction of the body 2. Therefore, in a case in which the joint section 3 is seen from the outer circumferential surface 2d side, a stepped interface C2 is formed by the front end surface 13a of the first protrusion portion 13, the front end surface 14a of the first reception portion 14, the notched surface S1, the mating surface 13b of the first protrusion portion 13 with respect to the second protrusion portion 15, the mating surface 15b of the second protrusion portion 15 with respect to the first protrusion portion 13, the notched surface S2, the front end surface 15a of the second protrusion portion 15, and the front end surface 16a of the second reception portion 16.

Therefore, in a case in which the piston ring 1 is mounted into the ring groove on the outer circumferential surface of the piston and receives a load generated by the vertical motion of the piston, the mating surface 13b of the first protrusion portion 13 and the mating surface 15b of the second protrusion portion 15 match with each other in the width direction of the body 2, and the stepped interface C2 is closed, whereby it is possible to shield gas flowing out in the width direction of the piston ring 1. Meanwhile, as illustrated in Figs. 7A and 7B, an internal corner portion 31 formed by the first protrusion portion 13 and the second reception portion 16 and an internal corner portion 32 formed by the first protrusion portion 13 and the second reception portion 16 are respectively chamfered and configure curved surfaces having a concave shape.

The first male portion 21 has a front end surface which is the mating surface 21a with respect to the first female portion 22 and extends perpendicular to the circumferential direction, and the second male portion 23 has a front end surface which is the mating surface 23a with respect to the second female portion 24 and extends perpendicular to the circumferential direction. Therefore, the front ends of the first male portion 21 and the second male portion 23 are respectively as thick as the mating surfaces 21a and 23a. Therefore, it is possible to ensure strength at the front ends of the first male portion 21 and the second male portion 23, and it is possible to favorably inhibit the breakage of the joint section 3.

In the first internal corner portion 25 formed by the first female portion 22 and the second male portion 23, the opposite surface 25a which faces the inclined surface 21b of the first male portion 21 is provided, in the second internal corner portion 26 formed by the second female portion 24 and the first male portion 21, the opposite surface 26a which faces the inclined surface 23b of the second male portion 23 is provided, the opposite surface 25a may be a curved surface having a concave shape which faces the inner circumferential surface 2c side, and the opposite surface 26a may be a curved surface having a concave shape which faces the outer circumferential surface 2d side. In this case, it is possible to narrow a gap between the inclined surface 21b of the first male portion 21 and the opposite surface 25a and a gap between the inclined surface 23b of the second male portion 23 and the opposite surface 26a. Therefore, it is possible to inhibit the accumulation of sludge or the like in the above-described gaps.

On at least one surface of the side surfaces 2a and 2b, the inner circumferential surface 2c, and the outer circumferential surface 2d, a surface-treated film may be provided. In this case, the body 2 can be protected by the surface-treated film.

The body 2 may be formed of metal or an alloy. Therefore, it is possible to sufficiently ensure the heat resistance of the piston ring 1.

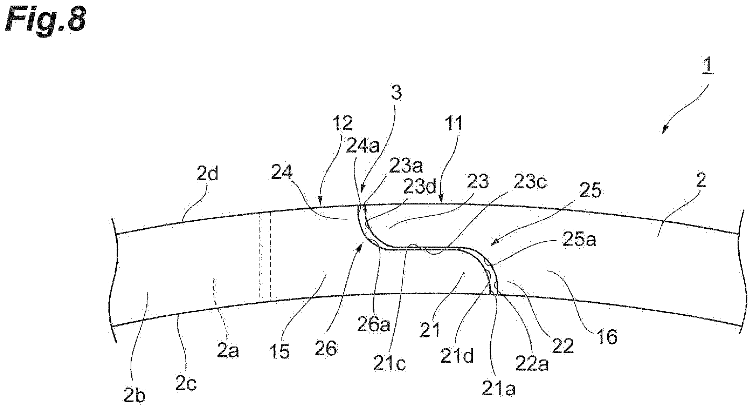

In the first embodiment, the first male portion 21 has the inclined surface 21b; however, in a modified example, the first male portion 21 may have, for example, a curved surface 21d having a convex shape which is inclined with respect to the mating surface 21a and faces the outer circumferential surface 2d side as illustrated in Fig. 8. Similarly, in the modified example, the second male portion 23 may have a curved surface 23d having a convex shape which is inclined with respect to the mating surface 23a and faces the inner circumferential surface 2c side instead of the inclined surface 23b. When the curved surfaces 21d and 23d are provided in the joint section 3 as described above, it is possible to favorably inhibit the first male portion 21 and the second male portion 23 from being stuck to each other during the mounting of the piston ring 1 into the ring groove on the outer circumferential surface of the piston. Additionally, as illustrated in Fig. 8, it is possible to further narrow a gap between the curved surface 21d of the first male portion 21 and the opposite surface 25a of the first internal corner portion 25, and it is possible to further narrow a gap between the curved surface 23d of the second male portion 23 and the opposite surface 26a of the second internal corner portion 26, and thus it is possible to favorably inhibit the accumulation of sludge or the like in the above-described gaps.

### (Second embodiment)

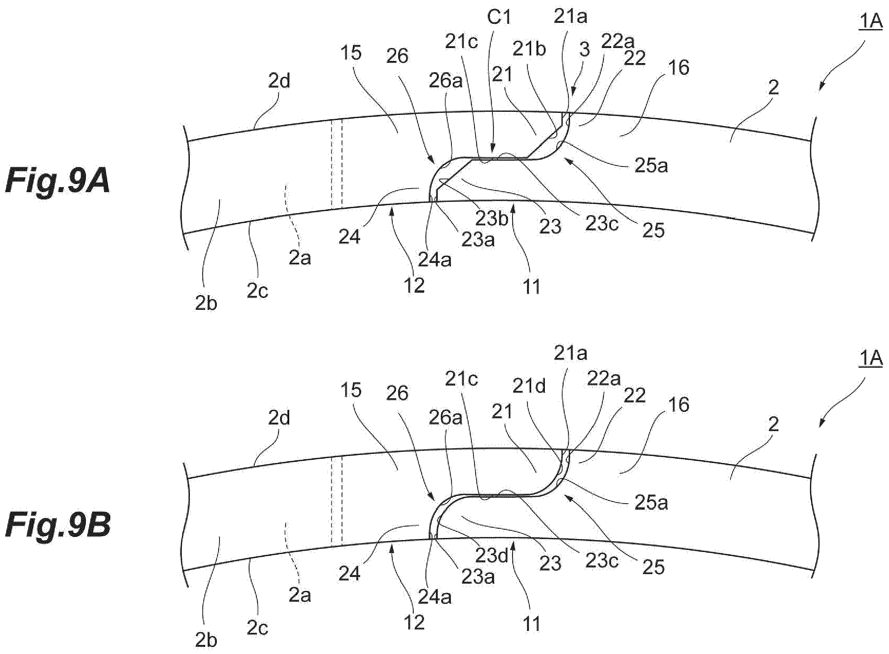

Hereinafter, piston rings according to a second embodiment and a modified example thereof will be described using Figs. 9A and 9B. In the second embodiment, common description between the first embodiment and the second embodiment will not be repeated.

Fig. 9A is an enlarged view of a joint section of a piston ring according to the second embodiment seen from the other side surface. A piston ring 1A illustrated in Fig. 9A is different from the piston ring 1 of the first embodiment in terms of the positions of the first male portion 21, the first female portion 22, the second male portion 23, and the second female portion 24. Specifically, on the side surface 2b of the body 2 and on the outer circumferential surface 2d side of the body 2, the first male portion 21 that protrudes from the second protrusion portion 15 toward the second reception portion 16 and the first female portion 22 that receives the first male portion 21 in the second reception portion 16 are provided. In addition, on the side surface 2b of the body 2 and on the inner circumferential surface 2c side of the body 2, the second male portion 23 that protrudes from the second reception portion 16 toward the second protrusion portion 15 and the second female portion 24 that receives the second male portion 23 in the second protrusion portion 15 are provided.

The first male portion 21 in the piston ring 1A has the inclined surface 21b which faces the inner circumferential surface 2c side and is inclined with respect to the mating surface 22a with respect to the first female portion 22 so that the front end tapers. Similarly, the second male portion 23 has the inclined surface 23b which faces the outer circumferential surface 2d side and is inclined with respect to the mating surface 24a with respect to the second female portion 24 so that the front end tapers. Additionally, the opposite surface 25a provided in the first internal corner portion 25 formed by the first female portion 22 and the second male portion 23 forms a curved surface having a concave shape which faces the outer circumferential surface 2d side, and the opposite surface 26a provided in the second internal corner portion 26 formed by the second female portion 24 and the first male portion 21 forms a curved surface having a concave shape which faces the inner circumferential surface 2c side.

In the piston ring 1A according to the second embodiment as well, in a case in which the joint ends 11 and 12 collide with each other when the diameter of the piston ring 1A is reduced, it is possible to cause the inclined surfaces 21b and 23b to first collide with each other. Therefore, in the second embodiment as well, the same action effect as in the first embodiment is provided.

Fig. 9B is an enlarged view of a joint section of a piston ring according to a modified example of the second embodiment seen from the other side surface. The first male portion 21 in the modified example illustrated in Fig. 9B may have the curved surface 21d having a convex shape which is inclined with respect to the mating surface 21a and faces the inner circumferential surface 2c side. Similarly, in the modified example, the second male portion 23 may have the curved surface 23d having a convex shape which is inclined with respect to the mating surface 23a and faces the outer circumferential surface 2d side instead of the inclined surface 23b. When the curved surfaces 21d and 23d are provided in the joint section 3 as described above, the same action effect as in the modified example of the first embodiment is provided.

The present invention is not limited to the first embodiment and the second embodiment. For example, in the first embodiment and the second embodiment, the body 2 being formed of metal or an alloy has been exemplified; however, in a case in which greater importance is put on ease of assembly, the body 2 of the piston ring 1 may be formed of a resin composition such as a synthetic resin. In this case, the piston ring 1 may be formed of a resin composition having heat resistance. Therefore, it is possible to easily form the joint section 3 while ensuring the heat resistance of the piston ring 1. Meanwhile, the resin composition having heat resistance is, for example, a resin composition including at least one of polyimide (PI), polyamide-imide (PAI), polytetrafluoroethylene (PTFE), polybenzimidazole (PBI), polyetherketoneketone (PEKK), polyether ketone (PEK), polyether ketone ether ketone ketone (PEKEKK), and liquid crystal polymer (LCP). Additionally, the resin composition may include a filler for improving the heat resistance of the resin composition. In such a case, it is possible to sufficiently ensure the heat resistance of the piston ring 1.

In the first embodiment, the opposite surface 25a of the first internal corner portion 25 is a curved surface having a concave shape which faces the inner circumferential surface 2c side, but is not limited thereto. For example, the opposite surface 25a may be a planar surface facing the inner circumferential surface 2c side. In this case, the opposite surface 25a is an inclined surface that is inclined with respect to the mating surface 22a of the first female portion 22 with respect to the first male portion 21 and connects the mating surface 22a and the mating surface 23c of the second male portion 23 with respect to the first male portion 21. Similarly, the opposite surface 26a of the second internal corner portion 26 may be a planar surface facing the outer circumferential surface 2d side. In this case, the opposite surface 26a is an inclined surface that is inclined with respect to the mating surface 24a of the second female portion 24 with respect to the second male portion 23 and connects the mating surface 24a and the mating surface 21c of the first male portion 21 with respect to the second male portion 23. Furthermore, in the second embodiment, the opposite surface 25a may be a planar surface facing the outer circumferential surface 2d side, and the opposite surface 26a may be a planar surface facing the inner circumferential surface 2c side.

In the first and second embodiments, the first male portion 21 has the inclined surface 21b, and the second male portion 23 has the inclined surface 23b, but the configuration is not limited thereto. For example, the second male portion 23 may have the curved surface 23d having a convex shape while the first male portion 21 has the inclined surface 21b. Similarly, the second male portion 23 may have the inclined surface 23b while the first male portion 21 has the curved surface 21d having a convex shape.

In the first embodiment, the opposite surface 25a of the first internal corner portion 25 is a curved surface having a concave shape which faces the inner circumferential surface 2c side, and the opposite surface 26a of the second internal corner portion 26 is a curved surface having a concave shape which faces the outer circumferential surface 2d side, but the opposite surfaces are not limited thereto. For example, the opposite surface 26a of the second internal corner portion 26 may be a planar surface facing the outer circumferential surface 2d side while the opposite surface 25a of the first internal corner portion 25 is a curved surface having a concave shape which faces the inner circumferential surface 2c side. Similarly, the opposite surface 26a of the second internal corner portion 26 may be a curved surface having a concave shape which faces the outer circumferential surface 2d side while the opposite surface 25a of the first internal corner portion 25 is a planar surface facing the inner circumferential surface 2c side. Furthermore, in the second embodiment, the opposite surface 26a may be a planar surface facing the inner circumferential surface 2c side while the opposite surface 25a is a curved surface having a concave shape which faces the outer circumferential surface 2d side, and the opposite surface 26a may be a curved surface having a concave shape which faces the inner circumferential surface 2c side while the opposite surface 25a is a planar surface facing the outer circumferential surface 2d side.

In the first and second embodiments, the mating surface 21a is a front end surface that extends perpendicular to the circumferential direction, but is not limited thereto. For example, the mating surface 21a may be an inclined surface forming a sharp angle with the inclined surface 21b or may be a part of the curved surface 21d. Similarly, the mating surface 23a may be an inclined surface forming a sharp angle with the inclined surface 23b or may be a part of the curved surface 23d.

In the first and second embodiments, the surfaces of the body 2 are the side surfaces 2a and 2b, the inner circumferential surface 2c, and the outer circumferential surface 2d, but are not limited thereto. For example, the surfaces of the body 2 may include the respective surfaces configuring the joint section 3. The respective surfaces configuring the joint section 3 include, for example, the front end surfaces 13a, 14a, 15a, and 16a, the mating surfaces 13b, 15b, 21a, 21c, 22a, 23a, 23c, and 24a, the inclined surfaces 21b and 23b, the curved surfaces 21d and 23d, the opposite surfaces 25a and 26a, and the notched surfaces S1 and S2. Meanwhile, the surface-treated film may be provided not only on the side surfaces 2a and 2b of the body 2, the inner circumferential surface 2c, and the outer circumferential surface 2d but also on at least one surface of the respective surfaces configuring the joint section 3. In this case, it is possible to favorably inhibit the breakage of the body 2 configuring the joint section 3.

In the first and second embodiments, when the piston ring 1 is mounted into the ring groove on the outer circumferential surface of the piston, the side surface 2a may be disposed on a combustion chamber side of the piston, and the side surface 2b may be disposed on the crankcase side of the piston. In this case, the mating surface 21c of the first male portion 21 with respect to the second male portion 23 and the mating surface 23c of the second male portion 23 with respect to the first male portion 21 are not easily affected by temperature expansion, and the influence of friction during the use of the piston ring 1 also decreases. Therefore, it is possible to maintain the interval between the first male portion 21 and the second male portion 23 in the thickness direction to be small.

In the first and second embodiments, when the piston ring 1 is mounted into the ring groove on the outer circumferential surface of the piston, the side surface 2a may be disposed on the crankcase side of the piston, and the side surface 2b may be disposed on the combustion chamber side of the piston. In this case, it is possible to favorably inhibit oil loss via the piston ring 1, and thus the oil consumption amount can be reduced.

In the first and second embodiments, the piston ring 1 has a substantially rectangular cross-sectional shape, but the cross-sectional shape is not limited thereto. For example, the cross-sectional shape of the piston ring 1 may be a keystone shape, may be a tapering shape, or may be a barrel face shape.

### REFERENCE SIGNS LIST

1, 1A ··· PISTON RING, 2 ··· BODY, 2a ··· SIDE SURFACE (ONE SIDE SURFACE), 2b ··· SIDE SURFACE (THE OTHER SIDE SURFACE), 2c ··· INNER CIRCUMFERENTIAL SURFACE, 2d ··· OUTER CIRCUMFERENTIAL SURFACE, 3 ··· JOINT SECTION, 11 ··· ONE JOINT END, 12 ··· THE OTHER JOINT END, 13 ··· FIRST PROTRUSION PORTION, 13a ··· FRONT END SURFACE, 13b ··· MATING SURFACE, 14 ··· FIRST RECEPTION PORTION, 14a ··· FRONT END SURFACE, 15 ··· SECOND PROTRUSION PORTION, 15a ··· FRONT END SURFACE, 15b ··· MATING SURFACE, 16 ··· SECOND RECEPTION PORTION, 16a ··· FRONT END SURFACE, 21 ··· FIRST MALE PORTION, 21a ··· MATING SURFACE (FRONT END SURFACE), 21b ··· INCLINED SURFACE, 21d ··· CURVED SURFACE HAVING CONVEX SHAPE, 22 ··· FIRST FEMALE PORTION, 23 ··· SECOND MALE PORTION, 23a ··· MATING SURFACE (FRONT END SURFACE), 23b ··· INCLINED SURFACE, 23d ··· CURVED SURFACE HAVING CONVEX SHAPE, 24 ··· SECOND FEMALE PORTION, 25 ··· FIRST INTERNAL CORNER PORTION, 25a ··· OPPOSITE SURFACE (FIRST OPPOSITE SURFACE), 26 ··· SECOND INTERNAL CORNER PORTION, 26a ··· OPPOSITE SURFACE (SECOND OPPOSITE SURFACE), C1, C2 ··· STEPEED INTERFACE, S1, S2 ··· NOTCHED SURFACE

## Claims

1. A piston ring comprising:
an annular body having an inner circumferential surface and an outer circumferential surface facing each other; and
a joint section formed in the body,
wherein, in the joint section,
on one side surface of the body, a first protrusion portion that protrudes from one joint end toward the other joint end and a first reception portion that receives the first protrusion portion in the other joint end are provided,
on the other side surface of the body, a second protrusion portion that protrudes from the other joint end toward the one joint end and a second reception portion that receives the second protrusion portion in the one joint end are provided,
on the inner circumferential surface side of the body, a first male portion that protrudes from the second protrusion portion toward the second reception portion and a first female portion that receives the first male portion in the second reception portion are provided,
on the outer circumferential surface side of the body, a second male portion that protrudes from the first protrusion portion toward the first reception portion and a second female portion that receives the second male portion in the first reception portion are provided,
the first male portion has an inclined surface or a curved surface having a convex shape which faces the outer circumferential surface side and is inclined with respect to a mating surface with respect to the first female portion so that a front end of the first male portion tapers, and
the second male portion has an inclined surface or a curved surface having a convex shape which faces the inner circumferential surface side and is inclined with respect to a mating surface with respect to the second female portion so that a front end of the second male portion tapers.

2. The piston ring according to claim 1,
wherein the first male portion is the inclined surface facing the outer circumferential surface side, and
the second male portion is the inclined surface facing the inner circumferential surface side.

3. The piston ring according to claim 1,
wherein the first male portion is the curved surface having a convex shape which faces the outer circumferential surface side, and
the second male portion is the curved surface having a convex shape which faces the inner circumferential surface side.

4. The piston ring according to any one of claims 1 to 3,
wherein the first male portion has a front end surface which is the mating surface with respect to the first female portion and extends perpendicular to a circumferential direction, and
the second male portion has a front end surface which is the mating surface with respect to the second female portion and extends perpendicular to the circumferential direction.

5. The piston ring according to any one of claims 1 to 4,
wherein, in a first internal corner portion formed by the first female portion and the second male portion, a first opposite surface which faces the inclined surface or the curved surface having a convex shape that faces the outer circumferential surface side of the first male portion is provided,
in a second internal corner portion formed by the second female portion and the first male portion, a second opposite surface which faces the inclined surface or the curved surface having a convex shape that faces the inner circumferential surface side of the second male portion is provided,
the first opposite surface is a curved surface having a concave shape or a planar surface which faces the inner circumferential surface side, and
the second opposite surface is a curved surface having a concave shape or a planar surface which faces the outer circumferential surface side.

6. The piston ring according to claim 5,
wherein the first opposite surface is the curved surface having a concave shape which faces the inner circumferential surface side, and
the second opposite surface is the curved surface having a concave shape which faces the outer circumferential surface side.

7. The piston ring according to claim 5,
wherein the first opposite surface is the planar surface which faces the inner circumferential surface side, and
the second opposite surface is the planar surface which faces the outer circumferential surface side.

8. A piston ring comprising:
an annular body having an inner circumferential surface and an outer circumferential surface facing each other; and
a joint section formed in the body,
wherein, in the joint section,
on one side surface of the body, a first protrusion portion that protrudes from one joint end toward the other joint end and a first reception portion that receives the first protrusion portion in the other joint end are provided,
on the other side surface of the body, a second protrusion portion that protrudes from the other joint end toward the one joint end and a second reception portion that receives the second protrusion portion in the one joint end are provided,
on an outer circumferential surface side of the body, a first male portion that protrudes from the second protrusion portion toward the second reception portion and a first female portion that receives the first male portion in the second reception portion are provided,
on an inner circumferential surface side of the body, a second male portion that protrudes from the first protrusion portion toward the first reception portion and a second female portion that receives the second male portion in the first reception portion are provided,
the first male portion has an inclined surface or a curved surface having a convex shape which faces the inner circumferential surface side and is inclined with respect to a mating surface with respect to the first female portion so that a front end of the first male portion tapers, and
the second male portion has an inclined surface or a curved surface having a convex shape which faces the outer circumferential surface side and is inclined with respect to a mating surface with respect to the second female portion so that a front end of the second male portion tapers.

9. The piston ring according to claim 8,
wherein the first male portion is the inclined surface facing the inner circumferential surface side, and
the second male portion is the inclined surface facing the outer circumferential surface side.

10. The piston ring according to claim 8,
wherein the first male portion is the curved surface having a convex shape which faces the inner circumferential surface side, and
the second male portion is the curved surface having a convex shape which faces the outer circumferential surface side.

11. The piston ring according to any one of claims 8 to 10,
wherein the first male portion has a front end surface which is the mating surface with respect to the first female portion and extends perpendicular to a circumferential direction, and
the second male portion has a front end surface which is the mating surface with respect to the second female portion and extends perpendicular to the circumferential direction.

12. The piston ring according to any one of claims 8 to 11,
wherein, in a first internal corner portion formed by the first female portion and the second male portion, a first opposite surface which faces the inclined surface or the curved surface having a convex shape that faces the inner circumferential surface side of the first male portion is provided,
in a second internal corner portion formed by the second female portion and the first male portion, a second opposite surface which faces the inclined surface or the curved surface having a convex shape that faces the outer circumferential surface side of the second male portion is provided,
the first opposite surface is a curved surface having a concave shape or a planar surface which faces the outer circumferential surface side, and
the second opposite surface is a curved surface having a concave shape or a planar surface which faces the inner circumferential surface side.

13. The piston ring according to claim 12,
wherein the first opposite surface is the curved surface having a concave shape which faces the outer circumferential surface side, and
the second opposite surface is the curved surface having a concave shape which faces the inner circumferential surface side.

14. The piston ring according to claim 12,
wherein the first opposite surface is the planar surface which faces the outer circumferential surface side, and
the second opposite surface is the planar surface which faces the inner circumferential surface side.

15. The piston ring according to any one of claims 1 to 14,
wherein, on at least one surface of the inner circumferential surface, the outer circumferential surface, the one side surface, the other side surface, the mating surface with respect to the first female portion, the inclined surface, and the curved surface having a convex shape in the first male portion, the mating surface with respect to the second female portion, the inclined surface, and the curved surface having a convex shape in the second male portion, a surface-treated film is provided.

16. The piston ring according to any one of claims 1 to 15,
wherein the body is formed of metal or an alloy.

17. The piston ring according to any one of claims 1 to 16,
wherein the body is formed of a resin composition having heat resistance.

18. The piston ring according to claim 17,
wherein the resin composition includes a filler for improving the heat resistance.
